# EUROPÄISCHE PATENTSCHRIFT

(11) **EP 2 917 796 B1**
(45) Veröffentlichungstag und Bekanntmachung des Hinweises auf die Patenterteilung: **17.05.2017**
(21) Anmeldenummer: 13792591.3
(22) Anmeldetag: 08.11.2013
(51) Int. Cl.: G05B 19/418, G01S 5/18

(54) **VORRICHTUNG ZUR ORTUNG VON WERKZEUGEN IN FERTIGUNGSPROZESSEN**
DEVICE FOR IMPROVING MANUFACTURING PROCESSES
DISPOSITIF POUR AMÉLIORER LES PROCÉDÉS DE PRODUCTION

(30) Priorität: 08.11.2012 DE 102012021788
(43) Veröffentlichungstag der Anmeldung: 16.09.2015
(73) Patentinhaber: Sarissa GmbH, 88250 Weingarten (DE)
(72) Erfinder: JAUCH, Volker, 88255 Baienfurt (DE)
(74) Vertreter: Otten, Roth, Dobler & Partner mbB Patentanwälte
(86) Internationale Anmeldenummer: PCT/EP2013/003367
(87) Internationale Veröffentlichungsnummer: WO 2014/072064

(56) Entgegenhaltungen:
- WO-A1-01/38897
- GB-A- 2 473 191
- US-A1- 2011 093 110

## Beschreibung

Zur Verbesserung von Fertigungsprozessen sind Assistenzsysteme oder Überwachungssysteme bekannt geworden, mittels denen die Bearbeitung von Werkstücken zum einen überwacht, zum anderen jedoch auch derart begleitet werden können, dass Hilfestellungen und Anleitungen für die Prozessabfolge möglich ist.

Im Handel sind hierzu bereits Vorrichtungen, bei denen Werkstücke für Montagevorgänge in eine gegenüber einer Ortungsvorrichtung fest vorgegebene Position gebracht werden. Die Ortungsvorrichtung ist mit drei Empfängern für Ultraschallsignale ausgestattet und über Laufzeitmessungen von Signalen verschiedener Sendeeinheiten, die an Werkzeugen angebracht sind, in der Lage, diese Sender zu orten. Hierdurch sind eine Ortung der Werkzeuge sowie eine Bestimmung der Orientierung der Werkzeuge möglich. Somit kann durch Verfolgung der Werkzeugbewegungen die Abfolge von Prozessschritten, beispielsweise Verschraubungen erfasst werden. Wird gleichzeitig ein Werkzeugparameter, beispielsweise der Betriebszustand und/oder das Drehmoment eines Schraubers erfasst, so kann nicht nur die korrekte Abfolge, sondern auch die korrekte Stärke der Verschraubung überprüft werden.

Über einen Monitor kann einer Bedienperson des Werkzeugs die als nächstes zu bearbeitende Verschraubung angezeigt und somit die Abfolge der Tätigkeiten erleichtert werden. Bei Nichteinhaltung der vorgegebenen Prozessschritte kann ein Warnsignal ergehen und/oder das Werkzeug außer Betrieb gesetzt werden. Auf diese Weise bietet das System der Bedienperson aufgrund der Prozessführung eine enorme Hilfestellung, wobei zugleich eine gute Qualitätssicherung gewährleistet ist.

Bei diesem System sind die Werkzeuge, die über entsprechende Sender geortet werden, fest mit der Ortungsvorrichtung verkabelt.

In den Druckschriften GB 2 473 191 A und US 2011/093110 A1 sind derartige Vorrichtungen mit nicht verfahrbaren Werkstücken offenbart.

In der EP 1 230 563 B1 bzw. WO 01/38897 A1 ist eine Vorrichtung bekannt geworden, bei der ein Werkstück auf einem Montageband verfahrbar vorgesehen ist.

Dem Werkstück wird eine Identifikation, zum Beispiel eine Produktions- oder Fahrgestellnummer zugeordnet. Die Position des Werkstücks wird dabei über eine Meldeeinrichtung für die Position von auf dem Montageband beförderten Werkstücken erfasst, wobei eine Zuordnungseinheit, welche aus der Entfernung eines Werkzeugs zu der Werkstückposition ein Werkzeug oder eine Werkzeugposition einem Werkstück zuordnet. Dabei können sich Sender und/oder Empfängern, die einem Werkstück zugeordnet sind, auch auf dem Montageband mitbewegen.

Die beschriebene Vorrichtung nach dem Stand der Technik wird ebenfalls zur Überprüfung von Montageabläufen vorgesehen. Nachteilig bei dieser Art Überwachungsvorrichtung ist der Umstand, dass stets eine absolute Ortung bzw. Positionserfassung sowohl der Werkstücke als auch der entsprechenden Werkzeuge in der Montagehalle erforderlich ist und eine Zuordnung dieser Positionen bzw. Ortungsdaten erforderlich ist.

Diese Vorrichtung ist somit dazu ausgelegt, in einer Montagehalle ständig die Werkstücke sowie die darin vorhandenen zu überwachenden Werkzeuge zu orten. Sie muss daher auf das jeweilige Montageband, alle vorgesehenen Werkzeuge sowie die Umgebung der Montage angepasst werden.

Aufgabe der Erfindung ist es, eine flexiblere und vielseitig einsetzbare Vorrichtung zu schaffen. Insbesondere soll die Vorrichtung mit oder ohne Montageband bei kontinuierlich oder diskontinuierlich bewegten Werkstücken oder auch bei feststehenden Werkstücken einsetzbar sein.

Diese Aufgabe wird ausgehend von einer Vorrichtung nach dem Oberbegriff des Anspruchs 1 durch dessen kennzeichnende Merkmale gelöst.

Dementsprechend zeichnet sich die Erfindung dadurch aus, dass eine Erfassungseinheit zur selbsttätigen Erfassung von wenigstens einem zuvor nicht im Wirkungsbereich der Ortungsvorrichtung befindlichen und somit in den Wirkungsbereich der Ortungsvorrichtung eintretenden Ortungsgegenstand und dass neben der Ermittlung von Ortungsdaten eine zusätzliche und/oder separate Datenübertragung prozessrelevanter Ist-Daten zur Erfassung wenigstens einer prozessrelevanten Eigenschaft des Ortungsgegenstandes von dem neu in den

Wirkungsbereich der Ortungsvorrichtung eintretenden Ortungsgegenstand vorgesehen
ist.

Vor der Erläuterung dieser Merkmale ist klarzustellen, was als Ortungsgegenstand in Frage kommt. Ein Ortungsgegenstand kann jeder zu ortender Gegenstand sein, der über seine Position bzw. Bewegung Aufschluss über einen damit verbundenen Prozessablauf geben kann. Ein Ortungsgegenstand kann ein Werkzeug oder auch ein Körperteil einer im Fertigungsprozess tätigen Person sein. Auch ein zu montierendes Teil kann als zu ortender Gegenstand vorgesehen werden.

Als Ortungssensor werden im Folgenden alle aktiven oder passiven Elemente bezeichnet, mit deren Hilfe die Ortung der Ortungsgegenstände relativ zur Ortungsvorrichtung erfolgt. Insbesondere werden alle hierzu verwendbaren Sender und/oder Empfänger als Ortungssensor bezeichnet.

Prozessrelevante Daten eines zu ortenden Gegenstandes können alle auf einen Prozessgegenstand bezogene Daten sein, die Aussagen über den Prozessablauf erlauben.

So können bei einem Werkzeug beispielsweise der Werkzeugtyp, eine individuelle Identifikation eines bestimmten Werkzeugs, aber auch Betriebsdaten, Zustandsdaten usw. erfasst werden.

Im Falle von Montageteilen als Ortungsgegenstand können beispielsweise eine Teilekennziffer, eine Teileidentifikation oder ähnliche Daten erfasst werden.

Auch Funktionsdaten von Werkzeugen, von Teilen und/oder Körperteilen von Bedienpersonen können erfindungsgemäß zusätzlich zu den Ortungsdaten erfasst werden. So kann beispielsweise ein Handschuh oder eine Manschette oder ähnliche, von Bedienpersonen angelegten Gegenständen hinsichtlich Funktion, Gegenstandsart usw. erfasst werden.

Mit Hilfe der zusätzlichen und/oder separaten Erfassung prozessrelevanter Daten von neu in den Wirkungsbereich der Ortungsvorrichtung eintretenden Ortungsgegenständen ist es möglich, einen Fertigungsprozess für ein Werkstück zu verfolgen, ohne die gesamte Montagehalle bzw. den gesamten Raum, in dem sich das Werkstück während des Fertigungsprozesses aufhält, vollständig zu überwachen. Insbesondere ist es nicht erforderlich, alle Werkzeuge oder sonstige Ortungsgegenstände, insbesondere auch nicht die zugehörigen Ortungssensoren permanent zu überwachen.

Es genügt vielmehr, wenn lediglich die Ortungsgegenstände in ihrer relativen Position zur Ortungsvorrichtung geortet werden, die in den Wirkungsbereich der Ortungsvorrichtung eintreten und hinsichtlich wenigstens einer prozessrelevanten Eigenschaft erfasst werden.

Der Ausdruck Wirkungsbereich ist dabei nicht nur räumlich, zum Beispiel im Hinblick auf die Reichweite der Ortungsvorrichtung, sondern auch funktional zu verstehen. So kann der Eintritt in den Wirkungsbereich der Ortungsvorrichtung beispielsweise dadurch vollzogen werden, dass in diesem Wirkungsbereich ein Ortungsgegenstand in Betrieb genommen wird. Dies gilt insbesondere für die Inbetriebnahme entsprechender Ortungssensor, die der Ortung dienen, und die im ausgeschalteten Zustand von der Ortungsvorrichtung nicht zu orten sind. Erfindungsgemäß ist somit eine flexible und damit auch hinsichtlich der Anzahl, Art und Funktion variable Einsatzmöglichkeit der Ortungsgegenstände gegeben.

So können beispielsweise Werkzeuge zum Einsatz kommen, die im zeitlichen Prozessablauf zur jeweiligen Zeit von außerhalb des Wirkungsbereichs der Ortungsvorrichtung, beispielsweise außerhalb eines Gruppenarbeitsplatzes oder sogar von außerhalb einer Montagehalle an das Werkstück verbracht werden. Auch die Montage auf einem Montageband ist durch eine erfindungsgemäße Vorrichtung ohne Weiteres zu überwachen, da die Ortungsgegenstände, die durch die Bewegung der mit dem Werkstück ortsfest verbundenen Ortungsvorrichtung auf dem Montageband und/oder durch eigene Bewegung in deren Wirkungsbereich eintreten, hinsichtlich wenigstens einer prozessrelevanten Eigenschaft erfasst und in die Prozessüberwachung aufgenommen werden können.

Weiterhin ist es erfindungsgemäß nicht mehr notwendig, stets den genauen Ort des Werkstücks zum Beispiel auf dem Montageband oder in der Montagehalle zu kennen. Entscheidend ist lediglich die Relativposition der Ortungsgegenstände im Wirkungsbereich der Ortungsvorrichtung sowie der Erfassung wenigstens einer prozessrelevanten Eigenschaft, zum Beispiel der Identifizierung im Hinblick auf individuelle Kennung, Funktion, Typ, Betriebsdaten usw.

Die zu überwachenden Prozessschritte können sodann unabhängig von der Position des Werkstücks nach einem Zeitplan oder nach einer Reihenfolge vorgesehener Prozessschritte überwacht werden.

Hierdurch ist eine erfindungsgemäße Vorrichtung flexibel einsetzbar. So können beispielsweise identisch ausgestaltete Vorrichtungen an unterschiedlichen Orten für den gleichen Fertigungsprozess eingesetzt werden. Werkzeuge oder Fertigungsmaschinen können problemlos aus dem Wirkungsbereich einer Ortungsvorrichtung in den Wirkungsbereich einer Ortungsvorrichtung eines anderen Werkstücks verbracht und dort zum Einsatz gebracht werden. Die gleichen Prozessschritte unter Einsatz der gleichen oder auch verschiedener Werkzeuge können problemlos an unterschiedlichen Orten überwacht werden.

Die erfindungsgemäße Vorrichtung arbeitet unabhängig von der Bewegung des Werkstücks, das heißt zum Beispiel unabhängig von der Geschwindigkeit eines Montagebands.

In einer einfachen Variante der Erfindung genügt als prozessrelevante Eigenschaft eine Kennung, mittels der gegebenenfalls weitere prozessrelevante Daten des Ortungsgegenstandes aus einem Datenspeicher, beispielsweise einer gespeicherten Tabelle oder einer gespeicherten Kennlinie zuzuordnen sind. So kann bei Erfassung einer Kennnummer beispielsweise ein Werkzeugtyp, ein individuelles Werkzeug usw. durch die Erfassungseinheit zugeordnet und zur Prozessbegleitung, das heißt zur Prozessüberwachung und/oder Prozessführung genutzt werden.

Gemäß der Erfindung wird die Ortung mittels einer Laufzeitmessung zwischen den Ortungssensoren vorgenommen. Über die Laufzeit des Ortungssignals lässt sich eine exakte Entfernung zwischen einem Sender und einem Empfänger bestimmen. Bei Verwendung mehrerer Laufstrecken lässt sich somit die Ortung präzisieren. Bei insgesamt drei linear unabhängigen Laufstrecken verbleiben maximal zwei Punkte als zu ortende Positionen, von denen in der Regel eine durch eine Plausibilitätsbetrachtung auszuschließen ist. So kann beispielsweise ein zweiter theoretisch möglicher Punkt systematisch immer außerhalb des Wirkungsbereichs der Ortungsvorrichtung liegen.

Diese Überlegungen basieren auf der Tatsache, dass bei drei gemessenen Entfernungen zu einem Ortungssensor die gemeinsamen Schnittpunkte von drei Kugeloberflächen im Raum zu ermitteln sind.

Erfindungsgemäß umfassen die Ortungssensoren der Ortungsvorrichtung sowie die Ortungsgegenstände Ultraschallsender und Ultraschallempfänger. Laufzeitmessungen mittels Ultraschallsender und -empfänger erlauben eine genaue präzise Ortung und sind bei Vorrichtungen gemäß dem eingangs genannten Stand der Technik bereits in Gebrauch.

So wird bei einer erfindungsgemäßen Vorrichtung die Ortungsvorrichtung mit wenigstens einem Ultraschallsender und der Ortungsgegenstand mit wenigstens einem Ultraschallempfänger ausgestattet.

Sofern die Ortungsvorrichtung über einen oder mehrere Sender arbeitet, ist der räumliche Wirkungsbereich der Ortungsvorrichtung relativ zu dem ortsfest mit der Ortungsvorrichtung angeordneten Werkstück durch die Reichweite des jeweiligen Senders festgelegt. Sobald ein Empfänger in den räumlichen Wirkungsbereich eintritt, kann sodann die erfindungsgemäße Erfassungseinheit tätig werden. Im umgekehrten Fall ist der Wirkungsbereich der Ortungsvorrichtung schwieriger zu definieren, da er von der Reichweite von Sendern abhängt, die relativ zum Werkstück bewegbar sind.

Grundsätzlich sind jedoch Ausführungen denkbar, die durch entsprechende Signalauswertung auch den Einsatz von Sendern bei den gegenüber dem Werkstück mobilen Ortungsgegenständen in Verbindung mit Empfängern auf Seiten der zum Werkstück ortsfesten Ortungsvorrichtung erlauben.

In der Erfindung umfassen die Ortungsvorrichtung und/oder die Ortungsgegenstände eine vom Ortungssignal separate Datenverbindung. Diese Ausführungsform beinhaltet zum einen den Vorteil, dass unabhängig von der Laufzeitmessung Informationen sowohl zwischen Ortungssensoren als auch bei Bedarf zwischen Ortungssensoren und einem mit der entsprechenden Datenverbindung ausgestatteten Rechner möglich ist. Bei einem entsprechend schnellen Übertragungsmedium kann auch ein Triggersignal für die Laufzeitmessung über eine solche Datenverbindung übertragen werden. Im einfachsten Fall kann die Datenverbindung über Kabel realisiert werden. Sie ist jedoch vorteilhafterweise mit einer drahtlosen Übertragungsstrecke realisiert.

Wie bereits erwähnt, ist es von Vorteil, diese Datenverbindung zwischen der Ortungsvorrichtung und dem Ortungsgegenstand vorzusehen, wobei insbesondere die Erfassungseinheit für neu hinzutretende Ortungsgegenstände auf Seiten der Ortungsvorrichtung vorgesehen werden kann. Die genannte Datenverbindung wird zur Übertragung von prozessrelevanten Ist-Daten der Ortungsgegenstände verwendet. Diese Verwendung ist in jedem Fall von Vorteil, sowohl in einer Ausführung, bei der das Triggersignal über diese Verbindung übermittelt wird oder auch bei einer Ausführung, bei der das Triggersignal anderweitig übermittelt wird.

Ein Ortungssensor eines neu in den Wirkungsbereich einer Ortungsvorrichtung eintretenden Ortungsgegenstandes kann beispielsweise als prozessrelevantes Ist-Datum ein Signal für den Erhalt eines Laufzeitsignals an die Erfassungseinheit für neu in den Wirkungsbereich eintretende Ortungsgegenstände senden. Sofern dies zum Beispiel mit einer Kennung verbunden ist, ist nicht nur der Eintritt eines bestimmten Ortungssensors in den Wirkungsbereich der entsprechenden Ortungsvorrichtung erfasst, sondern zugleich auch ein Ortungssignal durch die bereits vorgenommene Laufzeitmessung vorhanden.

Vorzugsweise ist zudem ein Prozessspeicher vorgesehen, in dem prozessrelevante Soll-Daten von Prozessabläufen hinterlegt sind.

Durch Vergleich prozessrelevanter Ist-Daten mit den zugehörigen prozessrelevanter Soll-Daten kann ein entsprechender Prozessbegleitrechner abgleichen, ob die entsprechenden Prozessabläufe bzw. Prozessschritte den Soll-Daten entsprechend voranschreiten oder ob Fehler in den Prozessabläufen auftreten.

Als prozessrelevante Daten, die prozessrelevanten Eigenschaften entsprechen, sind verschiedene Daten denkbar. In Frage kommen beispielsweise Identifikationsdaten zur Identifikation eines Ortungssensors oder eines Ortungsgegenstandes, der mit dem Ortungssensor verbunden ist. Es kommen Typendaten, beispielsweise zur Erkennung eines Werkzeugtyps in Frage. Auch Teilekennziffern für Montageteile, die mit entsprechenden Ortungssensoren versehen sind, sind über eine entsprechende Datenverbindung übertragbar. Funktionsdaten wie beispielsweise Drehzahlen oder Drehmomente von Werkzeugen sind ebenso als prozessrelevante Daten verwendbar, wie Betriebsdaten, die Aufschluss über einen bestimmten Betriebszustand geben. So kann beispielsweise die Erfassung eines neu in den Wirkungsbereich eintretenden Ortungsgegenstandes bzw. eines zugehörigen Ortungssensors dadurch durchgeführt werden, dass der eingeschaltete Zustand über die dafür vorgesehene Datenverbindung übermittelt wird.

Neben den genannten verschiedenen Daten können auch die Ortungsdaten über eine solche Datenverbindung übertragen werden. So kann beispielsweise vorgesehen werden, dass die Laufzeit unmittelbar am Ort des Empfängers eines Laufzeitsignals bestimmt und als Information an eine weiter verarbeitende Einheit, beispielsweise einen Prozessbegleitrechner übertragen wird. Auf diese Weise lässt sich die Laufzeit präziser erfassen, da neben der eigentlichen Laufzeit nur noch die Übertragungszeit für das Triggersignal in diese Messung der Laufzeit eingeht.

Vorzugsweise wird die Datenverbindung zur Übertragung prozessrelevanter Daten als eine digitale, elektromagnetische drahtlose Datenverbindung ausgestaltet. Die Ausgestaltung als digitale Datenverbindung ermöglicht die Verbindung einer Vielzahl von Teilnehmern auf dem gleichen Frequenzkanal, wie dies in drahtlosen Bus-Systemen der Fall ist. Die Ausgestaltung als elektromagnetische Datenverbindung bietet neben der Möglichkeit, etablierte Datenübertragungssysteme zu verwenden, auch im Falle der Übertragung eines Triggersignals den Vorteil, dass sich die Übertragungsgeschwindigkeit elektromagnetischer Wellen von Ultraschallausbreitungsgeschwindigkeiten in Größenordnungen unterscheidet.

Eine drahtlose Übertragung der prozessrelevanten Daten verschafft der erfindungsgemäßen Vorrichtung zudem eine erheblich größere Flexibilität für unterschiedlichste Fertigungsprozesse. Insbesondere neu hinzutretende Ortungssensoren bzw. deren zugehörigen Ortungsgegenstände müssen dabei nicht verkabelt werden, sondern können einfach erfasst werden, sofern sie in die Reichweite der Ortungsvorrichtung gelangen.

Vorteilhafterweise werden in der Prozesseinheit bzw. im Prozessbegleitrechner eine Überwachung des Ablaufs vorgegebener Prozessschritte anhand der prozessrelevanten Ist- und Soll-Daten vorgesehen. Bei korrektem Prozessablauf kann eine entsprechende Datei, beispielsweise eine Tabelle von Soll-Daten im zeitlichen Ablauf abgearbeitet werden. Bei fehlerhaften Prozessschritten kann eine entsprechende Reaktion erfolgen.

Vorzugsweise ist eine Anzeige bei einer erfindungsgemäßen Vorrichtung vorhanden, um die durchgeführten und/oder noch zu erledigenden Prozessschritte anzuzeigen. Bei fehlerhaften Prozessschritten kann sodann die Ausgabe eines Warnsignals zum Beispiel durch den Prozessbegleitrechner veranlasst werden. Ebenso kann ein Eingriff in die Steuerung von wenigstens einem Werkzeug und/oder einer Produktionsmaschine und/oder einer Produktionsanlage bei nicht korrekt erledigten Prozessschritten vorgesehen werden. Auf diese Weise können fehlerhafte Fertigungsschritte unterbunden und somit die Qualität verbessert werden.

Mit Hilfe von Anzeigegeräten, die beispielsweise visuelle Anleitungen oder akustischer Anleitungen geben können, kann auch eine Prozessbegleitung im Sinne einer Prozessführung von Personen erfolgen, die mit entsprechenden Fertigungsprozessen befasst sind. So kann beispielsweise das als nächstes einzusetzende Werkzeug, die als nächste zu bearbeitende Montageposition oder dergleichen angezeigt werden, so dass die mit der Fertigung betrauten Personen durch die Fertigungsprozesse geführt werden.

Ebenso kann in der Abarbeitung von Prozessschritten die entsprechende Werkzeugeinstellung und/oder -bereitstellung automatisch zum Beispiel durch den Prozessbegleitrechner veranlasst werden.

Ein Ausführungsbeispiel der Erfindung ist in der Zeichnung dargestellt und wird anhand der Figuren nachfolgend näher erläutert.

Im Einzelnen zeigen
- Figur 1: eine schematische Darstellung eines Montagebands mit erfindungsgemäßer Vorrichtung,
- Figur 2: ein Blockdiagramm einer erfindungsgemäßen Vorrichtung,
- Figur 3: eine schematische Darstellung einer Ortungsvorrichtung mit Ortungsgegenstand,
- Figur 4: eine schematische Darstellung einer weiteren Ortungsvorrichtung mit Ortungsgegenstand und
- Figur 5: eine schematische Darstellung eines Suchbetriebes und eines Ortungsbetriebes.

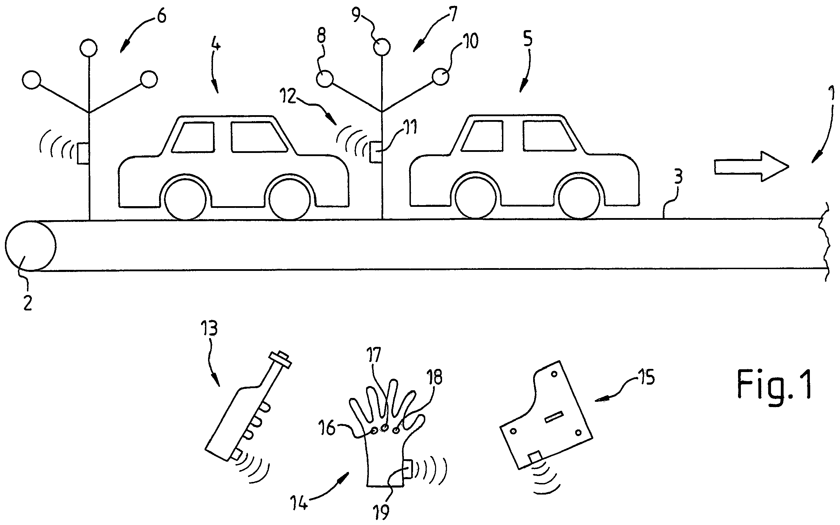

In Figur 1 ist ein Montageband 1 schematisch dargestellt, das ein um eine Umlenkrolle 2 umlaufendes Obertrum 3 aufweist. Auf dem Montageband 1 sind halbfertige Automobile 4, 5 als erfindungsgemäß zu bearbeitende Werkstücke dargestellt.

Jedem der Automobile 4, 5 bzw. Werkstücke ist eine Ortungsvorrichtung 6, 7 zugeordnet, die jeweils ortsfest zum entsprechenden Werkstück 4,5 auf dem Montageband 1 mitbewegt wird.

Jede Ortungsvorrichtung 6, 7 umfasst drei Ortungssensoren 8, 9, 10 sowie eine Kommunikationseinheit 11 zur drahtlosen Kommunikation mittels elektromagnetischer Wellen 12.

Drei schematisch dargestellte verschiedene Ortungsgegenstände in Form eines Schraubers 13, eines Handschuhs 14 sowie eines Montageteils 15 sind jeweils ebenfalls mit Ortungssensoren 16, 17, 18 sowie einer Kommunikationseinheit 19 versehen.

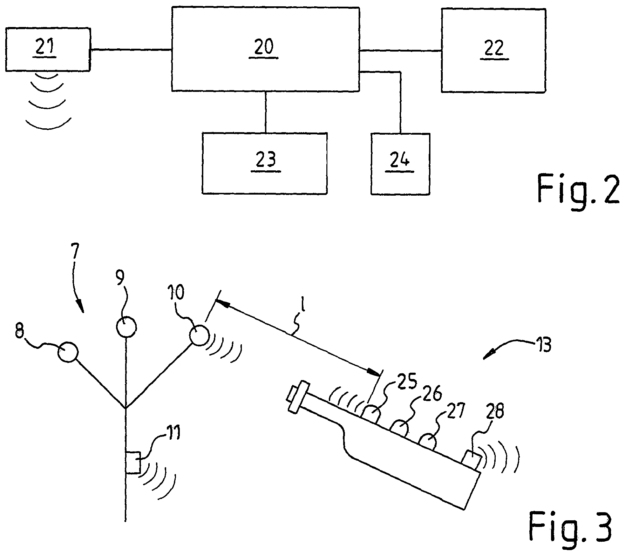

In Figur 2 ist ein Prozessbegleitrechner 20 dargestellt, der mittels einer Kommunikationseinheit 21 eine Datenverbindung zu Ortungsvorrichtungen und Ortungsgegenständen beinhaltet.

Er ist weiterhin mit einer Steuereinheit 22, einer Anzeige 23 sowie einem Signalgeber 24 verbunden.

In Figur 3 ist die Ortungsvorrichtung 7 sowie der Schrauber 13 als Ortungsgegenstand dargestellt. Der Schrauber 13 beinhaltet die Ortungssensoren 25, 26, 27 sowie eine Kommunikationseinheit 28.

Beispielhaft für die Methode der Ortung ist eine Laufstrecke l dargestellt, über die die Laufzeit eines Ortungssignals erfassbar ist. So kann beispielsweise der Ortungssensor 10 als Ultraschallsender und der Ortungssensor 25 als Ultraschallempfänger ausgebildet sein. Eine Möglichkeit der Laufzeitmessung besteht beispielsweise darin, dass der Prozessbegleitrechner 20 mittels der Kommunikationseinheit 21 ein Triggersignal an die Ortungsvorrichtung 7 sowie an den Ortungsgegenstand 13 sendet. Infolgedessen gibt der Ortungssensor 10 ein Ultraschallsignal aus, das nach Durchlaufen der Laufstrecke l vom Ortungssensor 25 detektiert wird. In einer Ausführungsform der Erfindung wird der Empfang des Ultraschallsignals über die Kommunikationseinheit 28 bestätigt, sodass der Prozessbegleitrechner 20 die Laufzeit ermittelt. In einer anderen Ausführungsform kann mit dem Triggersignal im Ortungssensor 25 eine Uhr gestartet, sodass mit Empfang des Ortungssignals unmittelbar die Laufzeit gemessen ist und diese als Information über die Kommunikationseinheit 28 übermittelt wird.

Grundsätzlich kann eine Ortung bzw. eine Laufzeitmessung auch in eine andere Richtung erfolgen, das heißt, der Ortungssensor 25 kann als Sender und der Ortungssensor 10 als Empfänger ausgebildet sein.

In den dargestellten Ausführungsvarianten sind jeweils drei Ortungssensoren an den Ortungsgegenständen angebracht. Hierdurch lässt sich neben der Position des jeweiligen Ortungsgegenstandes auch dessen Orientierung im Raum ermitteln, was gegebenenfalls bei der beabsichtigten Prozessüberwachung von Vorteil ist.

Wie anhand von Figur 1 erkennbar ist, wird an jedem Werkstück 4, 5 ein bezüglich dem Werkstück 4, 5 ortsfest angebrachte Ortungsvorrichtung 6, 7 vorgesehen. Über die Ortung eines Ortungsgegenstandes 13, 14, 15 sowie gegebenenfalls dessen Orientierung ist damit unmittelbar die relative Position des Ortungsgegenstandes in Bezug zum Werkstück 4, 5 sowie die Orientierung hierzu bekannt. Somit können die Bewegungen der Ortungsgegenstände 13, 14, 15 in Bezug auf die Werkstücke 4, 5 durch den Prozessbegleitrechner 20 überwacht werden.

Ersichtlich ist es dabei unerheblich, an welcher Position in einer Fertigungsanlage bzw. Montagehalle sich das jeweilige Werkstück 4, 5 befindet, da die Ortungsvorrichtung 6, 7 ortsfest zum Werkstück 4, 5 angeordnet ist.

Für die erfindungsgemäße Flexibilität im Einsatz der Überwachungsvorrichtung ist es jedoch von entscheidender Bedeutung, dass sich ein Ortungsgegenstand 13, 14, 15 auch außerhalb des Wirkungsbereichs der jeweiligen Ortungsvorrichtung 6, 7 befinden kann. Wird das Werkstück 4 oder aber auch das Werkzeug 13 derart bewegt, dass der Ortungsgegenstand, beispielsweise das Werkzeug 13 in den Wirkungsbereich der Ortungsvorrichtung 6 eines Werkstücks 4 gelangt, so wird nunmehr erfindungsgemäß der entsprechende Ortungsgegenstand 13 erfasst. Gibt, wie oben angeführt, in der vorliegenden Ausführung der Prozessbegleitrechner 20 beispielsweise ein Triggersignal über die Kommunikationseinheit 21, so kann dieses von allen Ortungsgegenständen, die eine Datenverbindung mit dem Prozessbegleitrechner aufnehmen können, erfasst werden. Da es sich bei der Datenverbindung über die Kommunikationseinheit 21 bevorzugt um eine Verbindung mit einem größeren Wirkungsbereich als der Wirkungsbereich der Ortungsvorrichtung 6, 7 handelt, können auch nicht im Wirkungsbereich der Ortungsvorrichtung 6, 7 befindliche Ortungsgegenstände 13, 14 15 ein solches Triggersignal empfangen, sobald sie eingeschaltet sind.

Nur die im Wirkungsbereich der jeweiligen Ortungsvorrichtung 6, 7 befindlichen Ortungsgegenstände erhalten jedoch das entsprechende Laufzeitsignal und können dementsprechend entweder ein Empfangssignal oder gleich die ermittelte Laufzeit an den Prozessbegleitrechner 20 übermitteln. Erhält nun der Prozessrechner 20 ein entsprechendes Empfangssignal oder eine Laufzeitinformation von einem zuvor nicht im Wirkungsbereich der jeweiligen Ortungsvorrichtung 6, 7 liegenden Ortungsgegenstand, so wird dieser Ortungsgegenstand als neu in den Wirkungsbereich eintretend erfasst. Damit der Prozessbegleitrechner das so erfasste Ortungssignal einem prozessrelevanten Ortungsgegenstand zuordnen kann, benötigt er eine Zusatzinformation, die über die Kommunikationseinheit 21 vom jeweiligen Ortungsgegenstand übermittelbar ist. Die hierzu vorgesehene Datenverbindung ist in der vorliegenden Ausführung separat vom Laufzeitsignal, beispielsweise als elektromagnetische Datenverbindung ausgebildet.

Je nach zu überwachenden Arbeitsschritt kann es dabei genügen, wenn der Prozessbegleitrechner eine Information über die Art oder Typ des entsprechenden Ortungsgegenstandes erhält. Sofern erforderlich, kann jedoch auch eine individuelle Identifizierung über die separate Datenverbindung erfolgen. Zusätzlich können auch weitere Informationen, wie beispielsweise Drehzahl, Drehmoment oder dergleichen während eines Montagevorgangs übermittelt werden. Auch die Einstellung eines Werkzeugs, das als Ortungsgegenstand erfasst wird, kann über diese Datenverbindung durch den Prozessbegleitrechner 20 vorgenommen werden.

Über Ortungsgegenstände, die von einer Montageperson angelegt werden können, beispielsweise den Handschuh 14 können Bewegungen von Montagepersonen verfolgt werden. Hierdurch ist eine Überwachung der Montagebewegungen oder auch eine Führung der Montagepersonen durch die vorzunehmenden Prozessschritte möglich.

Auch Montageteile, das heißt Teile, die an die Werkstücke 4, 5 zu montieren sind, können entsprechend überwacht werden, wie dies anhand einer Fahrzeugtür 15 schematisch dargestellt ist.

Die erfindungsgemäß erforderliche Flexibilität erfordert eine selbsttätige Erfassung von neu in den Wirkungsbereich der Ortungsvorrichtungen 6, 7 tretenden Ortungsgegenständen 13, 14, 15.

Die Prozessüberwachung oder Prozessführung kann vom Prozessbegleitrechner durch Vergleich prozessrelevanter Ist-Daten, die er beispielsweise über die separate Datenverbindung und seine Kommunikationseinheit 21 erhält, mit hinterlegten prozessrelevanten Soll-Daten erfolgen. Diese prozessrelevanten Soll-Daten können in einem nicht näher dargestellten Arbeitsspeicher des Prozessbegleitrechners 20 hinterlegt sein. Sie können sich auch aus Auswertung bereits erfolgter Prozessschritte ergeben. Die prozessrelevanten Soll-Daten können dabei selbstverständlich werkstückbezogen unterschiedlich sein, das heißt es können beispielsweise unterschiedliche Modelle von Werkstücken ohne Weiteres hintereinander auf dem gleichen Montageband oder an dem gleichen Montagearbeitsplatz bearbeitet werden.

Die erfindungsgemäße Prozessbegleitvorrichtung ist unabhängig vom absoluten Ort, an dem die jeweiligen Prozessschritte erfolgen und damit auch unabhängig von Bewegungen der Werkstücke, zum Beispiel in einer Montagehalle.

In einer besonderen Ausführungsform werden die Ortungssensoren 8, 9, 10 der Ortungsvorrichtungen 6, 7 mit Sendern für das Laufzeitsignal, beispielsweise mit Ultraschallsendern ausgestattet. Demnach sind bei den beweglichen Ortungsgegenständen 13, 14, 15 lediglich Empfänger für das Laufzeitsignal erforderlich. Hierdurch ist der Energiebedarf bei diesen beweglichen Gegenständen erheblich reduziert. Durch die separate Datenverbindung über die Kommunikationseinheiten 19 können die Ortungsgegenstände auch mit passiven Empfangssensoren 16, 17, 18 für eine Laufzeitmessung verwendet werden.

Die ortsfest mit den Werkstücken angeordneten Ortungsvorrichtungen 6, 7 können problemlos mit größeren Energiespeichern oder auch mit einem Stromversorgungsnetz verbunden werden. Grundsätzlich kann die separate Datenverbindung auf Seiten der Ortungsvorrichtungen 6, 7 auch verdrahtet mit dem Prozessbegleitrechner oder einer ähnlichen in der Funktion vergleichbaren Einheit erfolgen.

Für die Flexibilität der Prozessbegleitvorrichtung ist es ausreichend, wenn die Ortungsgegenstände 13, 14, 15 frei gegenüber dem Bearbeitungsort der Werkstücke 4, 5 bewegbar sind.

Über die Anzeige 23 und den Signalgeber 24 kann zum einen eine Information über erfolgte Prozessschritte an in den zu überwachenden Prozess involvierte Personen gegeben werden. Auch ein Warnsignal bei fehlerhaftem Prozessschritt kann beispielsweise über diese beiden Einheiten erzeugt werden. Die Prozessführung ist ebenso über diese Einheiten möglich, beispielsweise indem der Ort des nächsten Prozessschrittes dargestellt oder hervorgehoben wird. Auch akustisch kann eine Führung einer im Prozess befindliche Person zum Ort des nächsten Prozessschrittes vorgenommen werden.

Neben dem dargestellten Ausführungsbeispiel sind noch viele weitere Ausführungsvarianten denkbar. Wesentlich ist jedoch, dass mit dem zu überwachenden Prozess verbundene Ortungsgegenstände verwendbar sind, die nicht zwangsläufig ständig mit der jeweiligen Ortungsvorrichtung in Verbindung stehen müssen. Entscheidend ist, dass sie beim Eintreten in den Wirkungsbereich einer Ortungsvorrichtung selbsttätig über eine entsprechende Erfassungseinheit, beispielsweise im Prozessbegleitrechner 20 erfassbar und in die Prozessüberwachung integrierbar sind.

Vorzugsweise ist die Ortungsvorrichtung als eine Ultraschall-Ortungsvorrichtung zur Erfassung des/der Ortungsgegenstände mittels Ultraschallwellen ausgebildet und/oder ist eine zusätzliche und/oder separate Datenübertragungseinheit zur Übertragung von prozessrelevanten Ist- und/oder Soll-Daten als Funk-Datenübertragungseinheit zum Übertragen von prozessrelevanten Ist- und/oder Soll-Daten mittels elektromagnetischer Wellen ausgebildet.

Beispielsweise kann durch die unterschiedlichen Laufzeiten einerseits der Ultraschallwellen und andererseits der (viel schnelleren) elektro-magnetischen Funk-Übertragung oder auch der elektrischen Datenübertragung mittels Elektroleitungen bzw. elektrischen Drahtverbindungen und/oder mittels optischer Datenleitung, insb. Glasfaserleitungen, mit einem (elektro-magnetischen) Triggersignal bzw. beim Absenden eines Triggersignals durch die Laufzeiterfassung der Ultraschall-Ortung des/der Ortungssensoren der Abstand bzw. die exakte Position des Ortungsgegenstands ermittelt und ggf. weiterverarbeitet werden. So können beispielsweise mehrere Ortungsgegenstände, die sich in einem gemeinsamen Wirkbereich der Ortungsvorrichtung bzw. der Ortungsvorrichtungen befinden, in vorteilhafter Weise jeweils separat erfasst bzw. geortet werden.

Bevorzugt weisen die Ortungsgegenstände und/oder die Werkzeuge und/oder die Werkstücke eine individuelle oder eine Typen bezogene Identifikation bzw. Identifikationsnummer/-kennung auf. So kann in vorteilhafter Weise jeder Gegenstand und/oder jedes Werkstück und/oder Werkzeug individuell oder als z.B. Werkzeug-Typ wie Pneumatik-/Elektro-Schrauber, Halter, Schweißgerät, elektrische oder pneumatische Blechschere etc. identifiziert werden.

Aufgrund der vorteilhaften Identifikation können neue Komponenten bzw. neue Werkstücke und/oder Ortungsgegenstände und/oder neue oder ersetzte Wergzeuge in vorteilhafter Weise automatisch identifiziert werden. Die neu in den Wirkungsbereich eintretenden und/oder neu im Wirkungsbereich erfassten Komponenten und somit deren prozessrelevanter Ist-Daten können entsprechend mit den prozessrelevanten Soll-Daten z.B. für das entsprechende Werkzeug wie Schrauber etc. verglichen und in vorteilhafter Weise in den Prozess eingebunden werden.

Beispielsweise kann beim Weiterbewegen des Werkstückes und der Ortungsvorrichtung durch eine Montagehalle von einem ersten Montageplatz mit einem ersten Werkzeug, z.B. mit einem Saugnapf-Halter zum Anbringen/Montieren einer Glas-Scheibe etc., zu einem entfernten bzw. beabstandeten zweiten Montagearbeitsplatz mit einem zweiten Werkzeug, wie z.B. ein Elektro-Schrauber zum Montieren einer oder mehrerer identischer Fixierschrauben etc., dieses neu in den Wirkungsbereich der Ortungsvorrichtung eintretende, zweite Werkzeug erfasst bzw. identifiziert und in der Folge auch geortet werden. Sodann können die mit dem zweiten Werkzeug durchgeführten Bewegungen bzw. Positionen/Positionsänderungen und/oder Werkzeug-/Montagedaten wie Drehmoment etc. als prozessrelevante Ist-Daten erfasst und mit (abgespeicherten) prozessrelevanten Soll-Daten verglichen werden. Hieraus kann in vorteilhafter Weise die Korrektheit bzw. Fehlerfreiheit des Ist-Prozesses ermittelt bzw. kontrolliert werden.

Vorteilhafterweise ist mit dem Eintreten und/oder Austreten des Ortungsgegenstandes in den bzw. aus dem Wirkungsbereich eine Identifikation bzw. ein Anmeldevorgang und ggf. ein Abmeldevorgang realisiert.

Bei einem Mitbewegen der Ortungsvorrichtung mit dem sich während der Montagephase bzw. Transportphase mittels wenigstens einer vorteilhaften Transporteinheit bewegbaren Werkstück wie ein zu montierendes Auto oder dergleichen, ist gemäß der Erfindung eine erfindungsgemäße Identifikation bzw. ein Anmelden und/oder Abmelden z.B. von Werkzeugen unterschiedlicher und voneinander beabstandeter Arbeitsplätze bzw. entsprechend neu in den wandernden bzw. sich durch den Raum/Halle bewegenden Wirkungsbereich eintretenden Ortungsgegenständen/Komponenten von entscheidendem Vorteil und eröffnet gegenüber dem zuvor genannten Stand der Technik völlig neuartige und erweiterte bzw. flexiblere Anwendungsmöglichkeiten.

In einer bevorzugten Variante der Erfindung kann zwischen einer oder mehrerer Ortungsphasen bzw. zwischen der Prozessüberwachung in vorteilhafter Weise eine oder mehrere Suchphasen bzw. Erfassungsphasen vorgesehen werden. Hiermit kann in vorteilhafter Weise bereits im Voraus das Vorhandensein bzw. die Anwesenheit eines in absehbarer Zeit benötigten Gegenstandes bzw. in nächster Zeit zu verwendenden Werkzeugs wie den Schrauber 13 und/oder das Montageteil 15, d.h. die zu ortenden Ortungsgegenstände 13, 14, 15, abgefragt bzw. festgestellt oder nicht-festgestellt werden. Je nach dem, ob der/die (in naher Zukunft benötigten) Ortungsgegenstände 13, 14, 15 erfasst werden konnten oder nicht, d.h. ob die korrekte Anwesenheit des demnächst benötigten Ortungsgegenstandes 13, 14, 15 festgestellt werden konnte, kann die Prozessüberwachung ohne weitere Suchphase bzw. Erfassungsphase fortgesetzt und/oder weitere Such- und/oder Erfassungsphasen wiederholt werden.

In Figur 5 ist schematisch und beispielhaft eine skizzenhafte Darstellung verschiedener Betriebsphasen bzw. Ortungs- und Suchphasen im Zeitverlauf aufgeführt. So werden ein einem Suchbetrieb A, insb. mit mehreren, einzelnen Suchphasen, mehrere Triggersignale für benötigte, noch nicht erfasste/identifizierte Gegenstände gesendet. Das Triggersignal kann z.B. die Identifikationsadresse des zu suchenden Gegenstandes beinhalten und so einen Ultraschallsender zum Starten eines Ultraschallimpulses veranlassen. Mit entspr. Sende-/Empfangs-Komponenten 8, 9, 10, 11, 16, 17, 18, 19, 25, 26, 27, 28, 30 des Ortungssystems 6, 7 und/oder des Datenübertragungssystems 11, 21, 28, 30 wird hiermit die Erfassung und Identifizierung realisiert.

Alternierend werden in einem Ortungsbetrieb B, insb. mit mehreren, einzelnen Ortungsphasen, z.B. mehrere Triggersignale für die erfassten/identifizierten Gegenstände gesendet bzw. verwendet. So wird vorzugsweise mit (zum Teil) identischen Sende-/Empfangs-Komponenten 8, 9, 10, 11, 16, 17, 18, 19, 25, 26, 27, 28, 30 des Ortungssystems 6, 7 und/oder des Datenübertragungssystems 11, 21, 28, 30 wird hiermit die Ortung bzw. Prozessüberwachung realisiert.

In der o.g. Ausführungsform ist vorgesehen, dass z.B. die Kommunikationseinheit 11 und/oder 21 ein Such-Signal mit einer individuellen Kennung bzw. einem Identifikationscode für den in naher Zukunft benötigten Ortungsgegenstand 13, 14, 15 absendet, insb. per Funk, und ein Empfänger des benötigten Ortungsgegenstandes 13, 14, 15 dies empfängt und dann ein Sender, insb. Ultraschallsender, des Ortungsgegenstandes 13, 14, 15 diesem Signal antwortet. Bei einem Eintreffen des Antwortsignals bei der Ortungsvorrichtung 6, 7 kann ermittelt/erfasst werden, dass der zu ortende und in naher Zukunft, z.B. in ca. 5, 10 oder 30 Minuten, benötigte Ortungsgegenstand 13, 14, 15 sich nun im Wirkungsbereich der Ortungsvorrichtung 6, 7 bzw. des Montagebandes 1 befindet.

Nunmehr ist dieser Ortungsgegenstand erfasst und wird nicht mehr gesucht. Erst wenn dieser Ortungsgegenstand im Prozessablauf benötigt wird, wird er erfindungsgemäß geortet und überwacht.

Wird bei der Suchmessung ein Zeitlimit für die Laufzeit vorgegeben, innerhalb dem ein etwaiges Antwortsignal erwartet wird, kann durch die maximal zu erwartende Laufzeit des Antwortsignals der Wirkungs- bzw. Arbeitsbereich der Ortungsvorrichtung 6, 7 festgelegt werden. Kann kein Antwortsignal erfasst werden, wird vorzugsweise ein weiterer Suchlauf bzw. eine Suchphase durchgeführt. Die Abstände zweier Suchphasen können in vorteilhafter Weise zeitlich immer kürzer vorgesehen werden, wenn der benötigte Ortungsgegenstand 13, 14, 15 nicht antwortet bzw. identifiziert werden konnte und der tatsächliche Bedarf bzw. Einsatz im/für den Montageprozesses zeitlich immer näher kommt.

Ein "Zeitfenster" von bzw. eine Antwort/Rückmeldung innerhalb von ca. 15 oder 30 Millisekunden, d.h. der Laufzeit der Ultraschallwellen, entsprechen etwa 5 bzw. 10 Meter Abstand bzw. ein Wirkungsbereich mit ca. 5 bzw. 10 Meter Radius. So kann beispielsweise ein Alarm generiert werden, wenn eine vorgegebene Mindestzeit erreicht wird, d.h. beispielsweise 5 Minuten vor dem vom Prozessverlauf bzw. dem Montageablauf vorgesehenen Einsatz ein Werkzeug 13 eine Person oder ein sonstig benötigter Gegenstand nicht identifiziert bzw. erfasst werden konnte, wird ein Alarm bzw. Hinweis gegeben, so dass eine Bedien-/Montageperson entsprechend korrigierend eingreifen kann.

In Figur 4 ist eine weitere Variante schematisch dargestellt, die sich im Vergleich zur Variante gemäß Figur 3 dadurch unterscheidet, dass die Ortungsvorrichtung 7 zusätzlich einen weiteren Ultraschall-Sender 30, ggf. mit einer anderen SendeFrequenz als die Sender 8, 9, 10. Bei dieser vorteilhaften Variante kann in vorteilhafter Weise der Funk-Sender 28 des Ortungsgegenstandes 13, 14, 15 bzw. Werkzeugs 13 diesem Ultraschall-Signal durch Übermittlung von
Identifikationsinformationen antworten, so dass auch hiermit der Gegenstand 13 in vorteilhafter Weise ermittelt werden kann. Auch weitere Alternativen sind denkbar, wie dass z.B. einer der Ultraschallsender 8, 9, 10 vorzugsweise mit einer anderen Ultraschall-Frequenz die Funktion des Senders 30 bzw. die zuvor genannte Aufgabe übernimmt.

Mit den o.g. Ausführungsvarianten bzw. gemäß der Erfindung kann in vorteilhafter Weise ein reibungsloser Prozess-/ Montageablauf realisiert werden, da bereits vorab vor dem jeweiligen Bedarf/Einsatz eines zu ortenden Ortungsgegenstandes 13, 14, 15 die Anwesenheit bzw. das Eintreten in den erfindungsgemäßen Wirkungsbereich erfasst und kontrolliert wird.

Nach dem Einsatz/Bedarf des/der Ortungsgegenstände 13, 14, 15 können diese automatisch "abgemeldet" werden bzw. bewegen sich aus dem Wirkungsbereich heraus und sind somit für die Ortungsvorrichtung 6, 7 nicht mehr existent. So werden diese Ortungsgegenstände 13, 14, 15 in einer nachfolgenden Such-/Anmeldephase nicht mehr erfasst bzw. antworten dem entsprechenden Such-Signal nicht mehr und werden hierdurch entsprechend abgemeldet.

In einer weiteren vorteilhaften Ausführungsform der Erfindung wird für die Erfassung der neu hinzutretenden Gegenstände eine andere Ultraschall-Frequenz verwendet, als für die Ortung der Gegenstände.

### Bezugszeichenliste

- 1: Montageband
- 2: Umlenkrolle
- 3: Obertrum
- 4: Automobil
- 5: Automobil
- 6: Ortungsvorrichtung
- 7: Ortungsvorrichtung
- 8: Ortungssensor
- 9: Ortungssensor
- 10: Ortungssensor
- 11: Kommunikationseinheit
- 12: elektromagnetische Wellen
- 13: Schrauber
- 14: Handschuh
- 15: Montageteil
- 16: Ortungssensor
- 17: Ortungssensor
- 18: Ortungssensor
- 19: Kommunikationseinheit
- 20: Prozessbegleitrechner
- 21: Kommunikationseinheit
- 22: Steuereinheit
- 23: Anzeige
- 24: Signalgeber
- 25: Ortungssensor
- 26: Ortungssensor
- 27: Ortungssensor
- 28: Kommunikationseinheit
- 30: Ultraschallsender

## Patentansprüche

1. Vorrichtung zur Überwachung von Fertigungsprozessen, insbesondere von Montageprozessen von Maschinen oder Geräten, wobei ein bewegtes zu bearbeitendes Werkstück (4,5), eine ortsfest zum Werkstück (4,5) angeordnete Ortungsvorrichtung (6,7) mit Ultraschallsender oder Ultraschallempfänger aufweisenden Ortungssensoren (8,9,10) und wenigstens ein zu ortender, gegenüber dem Werkstück (4,5) bewegbarer Ortungsgegenstand (13,14,15) mit Ultraschallempfänger oder Ultraschallsender aufweisenden Ortungssensoren (16,17,18) im Wirkungsbereich der Ortungsvorrichtung (6,7) vorgesehen ist, wobei eine Ultraschall-Laufzeitmessung zwischen den Ortungssensoren (8,9,10) der Ortungsvorrichtung (6,7) und der Ortungsgegenstände (13,14,15)vorgesehen ist, wobei ein Prozessbegleitrechner (20) vorhanden ist, der die Durchführung von Prozessschritten an dem Werkstück anhand eines Vergleichs von prozessrelevanten Ist-Daten des Ortungsgegenstandes mit prozessrelevanten Soll-Daten erfasst,
**dadurch gekennzeichnet, dass**
eine Erfassungseinheit (20,22) zur selbsttätigen Erfassung wenigstens eines zuvor nicht im Wirkungsbereich der Ortungsvorrichtung (6,7) befindlichen und somit in den Wirkungsbereich der Ortungsvorrichtung (6,7)eintretenden Ortungsgegenstandes (13,14,15) mit einer zusätzlichen Datenübertragungseinheit (11,19,21) mit einer digitalen, elektromagnetischen, drahtlosen Datenverbindung zwischen der Ortungsvorrichtung (6,7) und dem Ortungsgegenstand (13,14,15) zur Übertragung von Identifikationsdaten eines Ortungssensors (16,17,18) oder eines Ortungsgegenstandes (13,14,15) als prozessrelevante Ist-Daten zur Erfassung des neu in den Wirkungsbereich der Ortungsvorrichtung (6,7) eintretenden Ortungsgegenstandes (13,14,15) vorgesehen ist.

2. Vorrichtung nach Anspruch 1, **dadurch gekennzeichnet, dass** als prozessrelevante Daten Typendaten, Teilekennziffern, Funktionsdaten, Betriebsdaten und/oder Zustandsdaten vorgesehen sind.

3. Vorrichtung nach einem der vorgenannten Ansprüche, **dadurch gekennzeichnet, dass** ein Prozessspeicher (20) vorgesehen ist, in dem prozessrelevante Soll-Daten Prozessschritten oder Prozessabläufen zugeordnet sind.

4. Vorrichtung nach einem der vorgenannten Ansprüche, **dadurch gekennzeichnet, dass** in dem Prozessbegleitrechner (20) eine Überwachung des Ablaufs vorgegebener Prozessschritte anhand der prozessrelevanten Ist- und Soll-Daten vorgesehen ist.

5. Vorrichtung nach einem der vorgenannten Ansprüche, **dadurch gekennzeichnet, dass** eine Anzeige (23) zum Anzeigen erledigter und/oder anstehender Prozessschritte und/oder dass eine Signaleinheit (24) zur Ausgabe von Warnsignalen bei nicht korrekt erledigten Prozessschritten vorgesehen ist und/oder dass ein Eingriff in die Steuerung von wenigstens einem Werkzeug (13) und/oder einer Produktionsmaschine und/oder einer Produktionsanlage bei nicht korrekt erledigten Prozessschritt vorgesehen ist.

## Claims

1. Apparatus for monitoring production processes, particularly assembly processes of machines or appliances, wherein there is provision for a moving workpiece (4, 5) that is to be machined, a locating apparatus (6, 7), arranged at a fixed location relative to the workpiece (4, 5), with locating sensors (8, 9, 10) having ultrasonic transmitters or ultrasonic receivers and at least one locatable item (13, 14, 15) with locating sensors (16, 17, 18) having ultrasonic receivers or ultrasonic transmitters that is to be located and that is moveable relative to the workpiece (4, 5), in the effective range of the locating apparatus (6, 7), wherein there is provision for an ultrasound propagation time measurement between the locating sensors (8, 9, 10) of the locating apparatus (6, 7) and the items to be located (13, 14, 15), and wherein a process accompanying computer (20) is present that senses the performance of process steps on the workpiece from a comparison of process-relevant actual data from the locatable item with process-relevant setpoint data,
**characterized in that**
there is provision for a sensing unit (20, 22) for automatically sensing at least one locatable item (13, 14, 15) that has not previously been in the effective range of the locating apparatus (6, 7) and hence enters the effective range of the locating apparatus (6, 7), with an additional data transmission unit (11, 19, 21) with a digital, electromagnetic, wireless data connection between the locating apparatus (6, 7) and the locatable item (13, 14, 15) for the purpose of transmitting identification data from a locating sensor (16, 17, 18) or an item to be located (13, 14, 15) as process-relevant actual data for sensing the locatable item (13, 14, 15) recently entering the effective range of the locating apparatus (6, 7).

2. Apparatus according to Claim 1, **characterized in that** the process-relevant data provided are type data, part identification numbers, functional data, operational data and/or state data.

3. Apparatus according to either of the preceding claims, **characterized in that** a process memory (20) is provided in which process-relevant setpoint data are associated with process steps or process cycles.

4. Apparatus according to one of the preceding claims, **characterized in that** the process accompanying computer (20) contains provision for monitoring of the execution of prescribed process steps on the basis of the process-relevant actual and setpoint data.

5. Apparatus according to one of the preceding claims, **characterized in that** there is provision for a display (23) for displaying accomplished and/or pending process steps and/or **in that** there is provision for a signal unit (24) for outputting warning signals in the event of incorrectly accomplished process steps and/or in that there is provision for intervention in the control of at least one tool (13) and/or a production machine and/or a production installation in the event of an incorrectly accomplished process step.

## Revendications

1. Dispositif destiné à la surveillance des processus de production, en particulier des processus de montage de machines ou d'appareils, selon lequel une pièce à usiner (4, 5), en mouvement et devant être traitée, un dispositif de localisation (6, 7), disposé de manière fixe par rapport à la pièce à usiner (4, 5) et pourvu de sondes de localisation (8, 9, 10) présentant un transmetteur à ultrasons ou un récepteur à ultrasons, ainsi qu'au moins un objet de localisation (13, 14, 15), restant à localiser, mobile par rapport à la pièce à usiner (4, 5) et pourvu de sondes de localisation (16, 17, 18) présentant un récepteur à ultrasons ou un transmetteur à ultrasons sont prévus dans la zone d'action du dispositif de localisation (6, 7), selon lequel une mesure du temps de propagation des ultrasons est prévue entre les sondes de localisation (8, 9, 10) du dispositif de localisation (6, 7) et les objets de localisation (13, 14, 15), selon lequel un ordinateur dédié à l'accompagnement des processus (20) est présent, lequel détecte la réalisation des phases de processus exécutées sur la pièce à usiner à l'aide d'une comparaison entre les données réelles de l'objet de localisation, d'une part, lesquelles sont pertinentes pour les processus, et les données nominales qui sont pertinentes pour les processus, d'autre part,
**caractérisé en ce que**
une unité de détection (20, 22), destinée à la détection autonome d'au moins un objet de localisation (13, 14, 15) qui ne se trouve pas au préalable dans la zone d'action du dispositif de localisation (6, 7) et qui pénètre par conséquent dans la zone d'action du dispositif de localisation (6, 7), est prévue avec une unité de transmission des données (11, 19, 21) supplémentaire, laquelle est pourvue d'une liaison des données numérique, électromagnétique et sans fil, entre le dispositif de localisation (6, 7) et l'objet de localisation (13, 14, 15), en vue de la transmission des données d'identification d'une sonde de localisation (16, 17, 18) ou d'un objet de localisation (13, 14, 15) sous la forme de données réelles, lesquelles sont pertinentes pour les processus, en vue de la détection de l'objet de localisation (13, 14, 15) venant juste de pénétrer dans la zone d'action du dispositif de localisation (6, 7).

2. Dispositif selon la revendication 1, **caractérisé en ce que** parmi les données qui sont pertinentes pour les processus, les données suivantes sont prévues : les données de type, les numéros d'identification de pièces, les données de fonction, les données de service et/ou les données d'état.

3. Dispositif selon l'une des revendications susmentionnées, **caractérisé en ce qu'**une mémoire de processus (20) est prévue, dans laquelle des données nominales qui sont pertinentes pour les processus sont associées aux phases des processus ou aux déroulements des processus.

4. Dispositif selon l'une des revendications susmentionnées, **caractérisé en ce que**, dans l'ordinateur dédié à l'accompagnement des processus (20), une surveillance du déroulement des phases de processus prédéfinies est prévue à l'aide des données réelles et nominales qui sont pertinentes pour les processus.

5. Dispositif selon l'une des revendications susmentionnées, **caractérisé en ce qu'**un affichage (23) destiné à l'affichage des phases de processus achevées et/ou restant à accomplir est prévu et/ou **caractérisé en ce qu'**une unité de signalisation (24) destinée à l'émission de signaux d'avertissement est prévue pour les phases de processus qui n'ont pas été achevées correctement et/ou **caractérisé en ce qu'**une intervention dans la commande de tout au moins une pièce à usiner (13) et/ou d'une machine de production et/ou d'une station de production est prévue pour les phases de processus qui n'ont pas été achevées correctement.
